# EUROPÄISCHE PATENTANMELDUNG

(11) **EP 2 915 802 A1**
(43) Veröffentlichungstag der Anmeldung: **09.09.2015**
(21) Anmeldenummer: 14157423.6
(22) Anmeldetag: 03.03.2014
(51) Int. Cl.: C07C 209/78, C08G 12/08, C07C 209/32

(54) **Verfahren zur Herstellung von Polyarylaminanlagerungsprodukten, Polyarylanlagerungsprodukte und ihre Verwendung**

(71) Anmelder: Bayer MaterialScience AG, 51373 Leverkusen (DE)
(72) Erfinder: Loddenkemper, Tim, 41542 Dormagen (DE); Westernacher, Stefan, 47906 Kempen (DE)
(74) Vertreter: BIP Patents

(57) **Zusammenfassung**

Die Erfindung betrifft ein Verfahren zur Herstellung eines Polyarylamin-Anlagerungsproduktes durch Umsetzung einer nukleophilen Komponente mit einer mehrfunktionellen elektrophilen, zur Reaktion mit Amin-Funktionalitäten befähigten Komponente, wobei die nukleophile Komponente einen in der Aufarbeitung eines rohen aromatischen Diamins anfallenden, Neben- oder Rückstandsstrom oder eine Mischung aus beiden umfasst, die so erhältlichen Polyarylamin-Anlagerungsprodukte sowie deren Verwendung als Harze, Klebstoffe, Härter, Vernetzer, Beschichtungen für Holzwerkstoffe oder Lackzusätze.

## Beschreibung

Die Erfindung betrifft ein Verfahren zur Herstellung eines Polyarylamin-Anlagerungsproduktes durch Umsetzung einer nukleophilen Komponente mit einer mehrfunktionellen elektrophilen, zur Reaktion mit Amin-Funktionalitäten befähigten Komponente, wobei die nukleophile Komponente einen in der Aufarbeitung eines rohen aromatischen Diamins anfallenden, Neben- oder Rückstandsstrom oder eine Mischung aus beiden umfasst, die so erhältlichen Polyarylamin-Anlagerungsprodukte sowie deren Verwendung als Harze, Klebstoffe, Härter, Vernetzer, Beschichtungen für Holzwerkstoffe oder Lackzusätze.

In der Makromolekularen Chemie unterscheidet man gemeinhin zwischen zwei grundsätzlichen Polymerisationstypen, der Stufenwachstumsreaktion (Polykondensation und Polyaddition) auf der einen Seite und der Kettenwachstumsreaktion (radikalische, kationische, anionische oder koordinative Polymerisation) auf der anderen Seite (Bernd Tieke, Makromolekulare Chemie: eine Einführung, VCH Verlagsgesellschaft mbH, Weinheim, 1997 [nachfolgend Tieke], S. 19). Es gibt auch Polymere, die unter Einsatz beider Polymerisationstypen hergestellt werden (beispielsweise ungesättigte Polyesterharze, die Co-Polymerisate von ungesättigten Polyestern mit Vinylmonomeren sind; vgl. Tieke, S. 63 und 64). Polymere, die mindestens teilweise unter Einsatz einer Stufenwachstumsreaktion hergestellt werden, werden nachfolgend als *Stufenwachstumspolymere* bezeichnet.

Stufenwachstumspolymere können in vernetzter Form vorliegen bis hin zu vollständig vernetzten Harzen, die keine thermoplastischen Eigenschaften mehr aufweisen und daher als Thermodure (häufig sprachlich unkorrekt "Duroplaste") bezeichnet werden können (Bruno Vollmert, Grundriss der Makromolekularen Chemie, E. Vollmert-Verlag, Karlsruhe, 1988 [nachfolgend Vollmert], Band I, S. 33). Bekannte Beispiele für solche Harze sind Phenol-Formaldehyd-Harze (PF-Harze), Melamin-Formaldehyd-Harze (MF-Harze), Harnstoff-Formaldehyd-Harze (UF-Harze) und Epoxidharze. Vernetzte Stufenwachstumspolymere werden nachfolgend auch als *Netzwerkpolymere* bezeichnet.

Zur Herstellung von Stufenwachstumspolymeren wird im Allgemeinen eine nukleophile Komponente beispielsweise enthaltend mehrere Alkohol- und/oder Amin-Funktionalitäten mit einer elektrophilen Komponente beispielsweise enthaltend mindestens eine Carbonyl-Funktionalität umgesetzt. Im Fall der Herstellung von Netzwerkpolymeren wird in der Regel zunächst in einer primären Reaktion eine niedermolekulare Vorstufe oder ein Vorpolymer mit vergleichsweise geringer mittlerer Molmasse hergestellt. Diese Vorstufe bzw. dieses Vorpolymer wird dann in einem zweiten Schritt, ggf. unter Zusatz von Vernetzern und/oder unter Einfluss von UV-Licht und/oder durch thermische Behandlung und/oder mit Hilfe von Katalysatoren, in Folgereaktionen bis zum gewünschten Vernetzungsgrad weiter polymerisiert. Für bestimmte Anwendungen ist jedoch auch denkbar, die Vorstufe bzw. das Vorpolymer selbst einzusetzen. So beschreibt beispielsweise EP 0 042 813 A2 die Anwendung von Aminoplastvorkondensaten in der Herstellung von Adsorptionsmitteln.

Großtechnische Bedeutung als nukleophile Komponente mit Amin-Funktionalitäten haben insbesondere Harnstoff und bei besonders hochwertigen Erzeugnissen Melamin, welche beide mit Formaldehyd als elektrophiler Komponente umgesetzt werden. Als Vorstufen bzw. Vorpolymere entstehen im Fall des Melamins Mono- bis Hexamethylolderivate des Melamins und im Fall des Harnstoffs Methylolharnstoffe (vgl. Tieke, S. 48 bis 49 und Vollmert, Band II, S. 22 bis 25). Die durch Härtung aus diesen Primärprodukten gewonnenen Harze werden auch als Aminoplaste bezeichnet. Es gibt auch Mischformen aus Melamin und Harnstoff, die Melamin-Harnstoff-Formaldehyd-Harze (MUF-Harze). Aminoplaste finden vielfältige Anwendungen, beispielsweise in der Herstellung von Formmassen, als Holzwerkstoffleime oder Tränkharze (Spanplatten), in kratzfesten Beschichtungen, als Melaminharz-Schaum in Polstermaterialien und Schallschutzeinrichtungen oder auch als offenporiger Schaum in Reinigungsutensilien.

Melamin gehört zur Gruppe der Aminotriazine, d. h. Verbindungen, bei denen mindestens eines der drei Wasserstoffatome eines Triazinisomers durch eine Aminofunktionalität substituiert ist. Neben Melamin selbst sind als weitere relevante Aminotriazine insbesondere Ammelin, Ammelid und substituierte Melamine, wie beispielsweise alkylierte oder hydroxyalkylierte Melamine zu nennen. Die großtechnische Herstellung von Melamin erfolgt fast ausschließlich durch Cyclisierung von Harnstoff unter Kohlendioxid- und Ammoniakabspaltung bei Temperaturen in der Größenordnung von 400 °C. Pro Mol Melamin werden dabei sechs Mole Harnstoff verbraucht, wobei letztlich nur drei Mole Harnstoff in den Heterozyklus eingebaut werden.

Die wirtschaftliche Herstellung von solchen nukleophilen Komponenten mit Amin-Funktionalitäten ist daher von großer Bedeutung. Es wäre erstrebenswert, die bisher üblichen Ausgangskomponenten, insbesondere das Melamin und andere übliche Aminotriazine, zumindest teilweise durch kostengünstigere Materialien ersetzen zu können.

GB 1 158 076 A offenbart ein Verfahren zur Herstellung von Polyaminpolymeren aus einem Polyamin, einem Aldehyd und einem Keton. Als Polyamin-Ausgangssubstanz können rohe Rückstände verwendet, die Mischungen von Aminen enthalten. Es werden ausschließlich (cyclo)aliphatische Amine beschrieben.

WO 9 301 126 A1 beschreibt einen Konverter zur Umwandlung von Schwefelwasserstoff und organischen Sulfiden in ungiftige Polymere. Dieser enthält ein Amin-Harz, das aus sterisch gehinderten Aminen und Aldehyden hergestellt wird. Als Aminkomponente können dabei die Nebenprodukte der Herstellung von Hexamethylendiamin eingesetzt werden

EP 0 160 752 A2 beschreibt ein Verfahren zur Aufarbeitung von Toluylendiisocyanat-Destillationsrückständen in wiederverwertbare Ausgangsprodukte für die Herstellung von Kunststoffen, bei dem der als Schlacke anfallende Destillationsrückstand vermahlen wird. Der vermahlene Rückstand kann als reaktiver Füllstoff und Bindemittel bei der Herstellung von Kondensationsprodukten des Formaldehyds mit Melamin, Harnstoff oder Phenol eingesetzt werden.

US 6 547 933 B2 offenbart ein Verfahren zur Aufreinigung von aromatischen Polyaminen, die durch Hydrierung aus den entsprechenden Polynitroverbindungen erhalten werden. Dabei werden die hochsiedenden Komponenten abgetrennt und können in einer separaten Phosgenierung recycelt werden.

EP 1 455 901 B1 beschreibt ein Verfahren zur Herstellung einer flammhemmenden Zusammensetzung durch Reaktion von Aminen mit Polyphosphorsäure. Die verwendeten Amine können vor der Reaktion mit Polyphosphorsäure mit Formaldehyd und Melamin umgesetzt werden. Als geeignete Amine werden hochsiedende Ethylendiamin-Mischungen erwähnt.

In DE 44 00 465 A1 werden Mischungen aus aromatischen Polyisocyanaten, Polyestern und Zusatzstoffen als Bindemittel zur Herstellung von Verbundmaterialien verwendet, wobei die nicht destillierte Bodenfraktion der Polyarylamin-Herstellung zur Herstellung der aromatischen Polyisocyanate verwendet werden kann

Der Stand der Technik beschreibt noch keine zufriedenstellenden Substitute für gebräuchliche in Stufenwachstumspolymerisationen eingesetzte nukleophile Komponenten mit Amin-Funktionalitäten.

Ein Gegenstand der vorliegenden Erfindung ist daher ein Verfahren zur Herstellung eines Polyarylamin-Anlagerungsprodukts durch Umsetzung einer nukleophilen Komponente mit einer mehrfunktionellen elektrophilen, zur Reaktion mit Amin-Funktionalitäten befähigten Komponente, wobei die nukleophile Komponente
(i) einen in der Aufarbeitung eines rohen aromatischen Diamins anfallenden, Leichtsieder enthaltenden Nebenstrom
   oder
(ii) einen in der Aufarbeitung eines rohen aromatischen Diamins anfallenden, Hochsieder enthaltenden Rückstandsstrom
   oder
(iii) eine Mischung aus einem in der Aufarbeitung eines rohen aromatischen Diamins anfallenden, Leichtsieder enthaltenden Nebenstrom und einem in derselben Aufarbeitung anfallenden Hochsieder enthaltenden Rückstandsstrom
   umfasst.

Ein weiterer Gegenstand der vorliegenden Erfindung sind die mit dem erfindungsgemäßen Verfahren erhältlichen Polyarylamin-Anlagerungsprodukte sowie deren Verwendung als Harze, Klebstoffe, Härter, Vernetzer, Beschichtungen für Holzwerkstoffe oder Lackzusätze.

Unter einem *Polyarylamin-Anlagerungsprodukt* wird erfindungsgemäß jedes Reaktionsprodukt verstanden, dass durch Anlagerung (durch eine Kondensations- oder Additionsreaktion) der mehrfunktionellen elektrophilen, zur Reaktion mit Amin-Funktionalitäten befähigten Komponente, an Amin-Funktionalitäten der erfindungsgemäßen nukleophilen Komponente oder durch Polymerisationsreaktionen der ggf. erhaltenen primären Anlagerungsprodukte (niedermolekulare Vorstufen bzw. Vorpolymere) erhalten wird. Auch Mischungen aus den primären Anlagerungsprodukten und (weiter) polymerisierten Folgeprodukten sind von dem Begriff Polyarylamin-Anlagerungsprodukt umfasst.

Die *elektrophile, zur Reaktion mit Amin-Funktionalitäten befähigte Komponente* ist erfindungsgemäß *mehrfunktionell.* Damit ist in diesem Zusammenhang gemeint, dass die elektrophile Komponente mindestens zweimal mit einem Nukleophil reagieren kann. Beispielsweise reagiert Formaldehyd als elektrophile Komponente mit einer Aminfunktion unter Ausbildung einer Methylolgruppe, die dann ihrerseits weiterreagieren kann.

Die industrielle Herstellung von aromatischen Diaminen umfasst neben der eigentlichen Reaktion (bspw. Hydrierung der korrespondierenden Dinitroverbindung) die *Aufarbeitung* des in der Reaktion anfallenden *rohen aromatischen Diamins.* Diese Aufarbeitung umfasst die Reinigung des rohen aromatischen Diamins auf den für eine gewünschte Folgeanwendung erforderlichen Reinheitsgrad. Eine solche Aufarbeitung geschieht (meist) durch Destillation oder (seltener) durch Kristallisation.

In jedem Fall wird neben dem gereinigten aromatischen Diamin auch mindestens ein *Rückstandsstrom* erhalten, beispielsweise der Sumpfaustrag einer Destillationskolonne oder die Mutterlauge einer Kristallisation. Im Allgemeinen enthält ein solcher Rückstandsstrom, ggf. neben Restmengen des eigentlichen aromatischen Diamins, die nicht dem Wertproduktstrom zugeschlagen werden konnten, auch Anteile an oligomerisiertem oder polymerisiertem Diamin und andere Hochsieder. Ohne an eine Theorie gebunden sein zu wollen ist anzunehmen, dass - neben den ggf. vorhandenen Restmengen an aromatischem Diamin - diese oligomerisierten und polymerisierten Anteile des Diamins als Nukleophile in der Umsetzung mit der mehrfunktionellen elektrophilen, zur Reaktion mit Amin-Funktionalitäten befähigten Komponente reagieren.

Neben einem Rückstandsstrom wird, insbesondere bei Aufarbeitung des rohen aromatischen Diamins durch Destillation, auch ein *Nebenstrom* erhalten, beispielsweise die Brüden einer Destillationskolonne. Im Allgemeinen enthält ein solcher Nebenstrom, ggf. neben Restmengen des eigentlichen aromatischen Diamins, die nicht dem Wertproduktstrom zugeschlagen werden konnten, auch Anteile an nicht-polymeren aminischen Nebenkomponenten und andere Leichtsieder. Ohne an eine Theorie gebunden sein zu wollen ist anzunehmen, dass - neben den ggf. vorhandenen Restmengen an aromatischem Diamin - diese aminischen Nebenkomponenten als Nukleophile in der Umsetzung mit der mehrfunktionellen elektrophilen, zur Reaktion mit Amin-Funktionalitäten befähigten Komponente reagieren.

Rückstands- und Nebenstrom ist also gemeinsam, dass es sich um in der Aufarbeitung eines rohen aromatischen Diamins anfallende Stoffströme handelt, die vom "eigentlichen" Wertproduktstrom verschieden sind.

Als *Hochsieder* werden im Rahmen dieser Erfindung Verbindungen oder azeotrop siedende Gemische von Verbindungen bezeichnet, deren Siedepunkt jeweils höher ist als der des aromatischen Diamins (des eigentlichen Wertprodukts der Herstellung des aromatischen Diamins). Dementsprechend werden Verbindungen oder azeotrop siedende Gemische von Verbindungen, deren Siedepunkt jeweils niedriger ist als der des aromatischen Diamins, im Folgenden als Leichtsieder bezeichnet.

Nachstehend werden Ausführungsformen der Erfindung näher beschrieben. Dabei sind verschiedene Ausführungsformen beliebig miteinander kombinierbar, solange sich für den Fachmann aus dem Kontext nicht eindeutig das Gegenteil ergibt.

Geeignete aromatische Diamine im Sinne der vorliegenden Erfindung sind insbesondere Methylendiphenyldiamin (nachfolgend MDA), Naphthyldiamin (nachfolgend NDA) und Toluylendiamin (nachfolgend TDA), wobei TDA besonders bevorzugt ist. Der Begriff "Toluylendiamin" oder "TDA" ohne Kennzeichnung des Substitutionsmusters am aromatischen Ring umfasst im Rahmen dieser Erfindung alle Isomere (ein "TDA-Strom" kann daher, muss aber nicht, alle denkbaren Isomere umfassen).

Die mehrfunktionelle elektrophile Komponente umfasst bevorzugt mindestens eine Verbindung mit einer oder mehreren Oxogruppe(n) (-CO-) und/oder mindestens eine Verbindung mit einer oder mehreren Epoxid-Funktion(en). Als Verbindungen mit einer oder mehreren Oxogruppe(n) eignen sich insbesondere Aldehyde, besonders bevorzugt C₁- bis C₄-Aldehyde, ganz besonders bevorzugt Formaldehyd, sowie Oxocarbonsäurederivate. Unter einem Oxocarbonsäurederivat ist dabei eine Verbindung zu verstehen, die sowohl mindestens eine Oxogruppe (-CO-) oder ein Derivat einer Oxogruppe (wie beispielsweise ein Hemiketal, Hemiacetal, Imin, Hemiaminal, Hemiamidal sowie deren Aminoderivate) als auch mindestens ein Derivat einer Carboxylgruppe (wie beispielsweise ein Ester, Amid, Amidin, Iminoester, Nitril, Anhydrid sowie die Aminoderivate des Anhydrids) im Molekül aufweist. Ein besonders bevorzugtes Oxocarbonsäurederivat ist Glyoxylsäuremethylester-Methyl-Hemiacetal (GMHA). Als Verbindung mit einer Epoxid-Funktion eignet sich insbesondere Epichlorhydrin.

Besonders bevorzugt umfasst die elektrophile Komponente Formaldehyd. Ganz besonders bevorzugt wird als elektrophile Komponente eine wässrige Lösung von Formaldehyd (sog. "Formalin") eingesetzt, wobei der Massenanteil von Formaldehyd bevorzugt 30 % bis 56 %, besonders bevorzugt 31 % bis 40 %, ganz besonders bevorzugt 32 % bis 37 %, jeweils bezogen auf die Gesamtmasse der wässrigen Lösung, beträgt.

Enthält die nukleophile Komponente den Leichtsieder enthaltenden Nebenstrom aus der Aufarbeitung eines rohen aromatischen Diamins, d. h. den Bestandteil (i), so beträgt dessen Massenanteil bevorzugt mindestens 5%, besonders bevorzugt von 10 % bis 100 %, jeweils bezogen auf die Gesamtmasse der nukleophilen Komponente.

Enthält die nukleophile Komponente den Hochsieder enthaltenden Rückstandsstrom aus der Aufarbeitung eines rohen aromatischen Diamins, d. h den Bestandteil (ii), so beträgt dessen Massenanteil in der nukleophilen Komponente bevorzugt mindestens 25 %, besonders bevorzugt von 45 % bis 75 %, jeweils bezogen auf die Gesamtmasse der nukleophilen Komponente.

Enthält die nukleophile Komponente den Bestandteil (iii), also eine Mischung aus dem Leichtsieder enthaltenden Nebenstrom (i) und dem Hochsieder enthaltenden Rückstandsstrom (ii), so beträgt der Massenanteil der Mischung (iii) bevorzugt mindestens 5 %, besonders bevorzugt 9 % bis 100 %, bezogen auf die Gesamtmasse der nukleophilen Komponente. Der Massenanteil von (i) in der Mischung (iii), d. h. bezogen auf die Gesamtmasse der Mischung (iii), beträgt dabei bevorzugt mindestens 10 %, besonders bevorzugt von 30 % bis 90 %, wobei der Massenanteil des Bestandteils (ii) in der Mischung (iii), d. h. bezogen auf die Gesamtmasse der Mischung (iii), maximal 90 %, bevorzugt 10 % bis 70 %, beträgt.

Als weitere Bestandteile der nukleophilen Komponente neben den Bestandteilen (i), (ii) oder (iii) eignen sich aus dem Stand der Technik bekannte Nukleophile mit Amin-Funktionalitäten, beispielsweise Harnstoff, Melamin oder andere Aminotriazine. In dieser Ausführungsform werden die Nukleophile des Standes der Technik also nur teilweise durch den erfindungsgemäßen Rückstandsstrom ersetzt. Als Aminotriazine in Betracht kommen neben Melamin selbst Ammelin, Ammelid, Benzoguanamin, Acetoguanamin und Bisguanamine wie Adipo-, Glutaro- oder Methylglutarobisguanamin und Spiroguanamine. In Betracht kommen auch Verbindungen, welche mehrere, z. B. kondensierte, Aminotriazinkerne enthalten. Die Aminotriazine können auch, zumindest teilweise, methyloliert und verethert sein. Bevorzugt sind zumindest teilweise methyloliertes und verethertes Melamin und entsprechende Verbindungen, welche mehrere Melaminkerne, beispielsweise 2 bis 5 über Methylolgruppen verbrückte Melamine, enthalten, oder deren Gemische. Bevorzugte Aminotriazine enthalten im Mittel 1 bis 3, insbesondere 1 Melaminkern(e) je Molekül. Darüber hinaus ist es möglich, neben dem in der Aufarbeitung eines rohen aromatischen Diamins anfallenden, Hochsieder enthaltenden Rückstandsstrom Nukleophile ohne Aminfunktionalitäten, wie bspw. Phenol, einzusetzen.

Es ist auch möglich, ausschließlich einen der Bestanteile (i), (ii) oder (iii) als nukleophile Komponente einzusetzen.

Die Umsetzung der nukleophilen Komponente mit der elektrophilen Komponente erfolgt bevorzugt wie nachstehend beschrieben. Für den Fall, dass die nukleophile Komponente den Bestandteil (iii) umfasst, ist es sowohl möglich, (1) zuerst die Bestandteile (i) und (ii) zu vermischen und dann die erhaltene Mischung mit der elektrophilen Komponente umzusetzen als auch (2) zuerst den Bestandteil (i) *(oder (ii))* mit der elektrophilen Komponente zu vermischen und dann den Bestandteil (ii) *(oder (i))* hinzuzugeben. Variante (1) ist bevorzugt.

Bevorzugt wird die erfindungsgemäß einzusetzende nukleophile Komponente zunächst bei einer Temperatur von 20 °C bis 220 °C, besonders bevorzugt von 40 °C bis 160 °C und bei einem absoluten Druck von bevorzugt 1 bar bis 15 bar, besonders bevorzugt von 1 bar bis 6 bar, mit der elektrophilen Komponente umgesetzt. Bevorzugt ist die Umsetzung in einem pH-Bereich von 3 bis 11, besonders bevorzugt in einem pH-Bereich von 7 bis 10. Der gewünschte pH-Wert kann mit gängigen Säuren (beispielsweise p-Toluolsulfonsäure, Amidosulfonsäure, Glyoxylsäure, Salpetersäure, Salzsäure, Schwefelsäure) bzw. Basen (wie beispielsweise Natriumhydroxid, Kaliumhydroxid, Diethanolamin, Triethanolamin, Morpholin) eingestellt werden. Auf diese Weise werden bevorzugt primäre Anlagerungsprodukte, d. h. niedermolekulare Vorstufen bzw. Vorpolymere, erhalten. Im Falle der Umsetzung mit Formaldehyd als elektrophiler Komponente werden die Aminfunktionalitäten der nukleophilen Komponenten in diesem Schritt zumindest teilweise in Methylolgruppen überführt.

Die Umsetzung kann ohne Zugabe eines Lösungsmittels, in wässriger Lösung oder in einem inerten organischen Lösungsmittel durchgeführt werden. Wird als elektrophile Komponente wässrige Formaldehydlösung verwendet, erübrigt sich die Zugabe eines weiteren Lösungsmittels im Allgemeinen.

Die Reaktion kann bis zu einem gewünschten Umsatz geführt werden. Der Umsatz kann über gängige analytische Methoden wie beispielsweise Flüssigkeitschromatographie, Gaschromatographie, und/oder Infrarot-Spektroskopie, UV-Spektroskopie ermittelt werden. Es ist auch möglich, die auftretenden Edukte, Zwischen- und Endprodukte NMR-spektroskopisch und durch chemische Analyse wie in Die Angewandte Makromolekulare Chemie, 56 (1976), 15 - 25 sowie Die Angewandte Makromolekulare Chemie, 62 (1977), 7 - 31 für diverse Formaldehyd-Harze beschrieben zu charakterisieren und dies zur Umsatzbestimmung mit heranzuziehen.

Ist das Polyarylamin-Anlagerungsprodukt unter den gewählten Bedingungen schwer löslich, wie es bei der Umsetzung mit wässriger Formaldehydlösung als elektrophiler Komponente der Fall ist, wird die Reaktion vorteilhafterweise so lange geführt, bis kein weiterer Feststoff mehr ausfällt.

Um ein einheitliches Produkt zu erhalten, ist es bevorzugt, das Verhältnis von elektrophiler Komponente zu Aminfunktionalitäten der nukleophilen Komponente so zu wählen, dass die Aminfunktionalitäten vollständig abreagieren. Das bedeutet im Fall des Formaldehyds als elektrophiler Komponente, dass bevorzugt alle primären Aminfunktionalitäten -NH₂ der nukleophilen Komponente zu -N(CH₂OH)₂-Gruppe und ggf. vorhandene sekundäre Aminfunktionaliäten -NRH zu -NR(CH₂OH)-Gruppe umgesetzt werden. Da die erfindungsgemäß einzusetzende nukleophile Komponente einen Rückstandsstrom umfasst, der oligomerisierte und polymerisierte Anteile enthalten kann, kann es u. U. aufwändig sein, den Anteil an Aminfunktionalitäten in der nukleophilen Komponente analytisch zu ermitteln und daraus die erforderliche Menge an Formaldehyd zu errechnen. In diesem Fall lässt sich die erforderliche Menge an Formaldehyd jedoch in einfachen Vorversuchen experimentell ermitteln.

Die so erhaltenen primären Anlagerungsprodukte können in Folgereaktionen weiter umgesetzt werden. So können die primären Anlagerungsprodukte durch Temperatureinwirkung und/oder pH-Wert-Erniedrigung (weiter) poylmerisiert werden, falls gewünscht bis zur vollständigen Aushärtung (Harzbildung). Diese Weiterkondensation/Aushärtung der primären Anlagerungsprodukte wird bevorzugt im pH-Bereich von pH 3 bis 6,5 durchgeführt. Der gewünschte pH-Wert kann mit gängigen Säuren (beispielsweise p-Toluolsulfonsäure, Amidosulfonsäure, Glyoxylsäure, Salpetersäure, Salzsäure, Schwefelsäure) eingestellt werden. Die Temperatur beträgt bevorzugt > 80 °C, besonders bevorzugt 90 °C bis 250 °C, ganz besonders bevorzugt 140 °C bis 190 °C. Es kann wünschenswert sein, die Aushärtung zunächst nicht bis zur vollständigen Vernetzung durchzuführen, sondern den Prozess auf der Stufe noch schmelzbarer bzw. löslicher Vorkondensate zu unterbrechen. Diese können dann vor der endgültigen Aushärtung noch weiter behandelt, beispielsweise mit Füllstoffen vermischt, werden.

Die so erhaltenen Stufenwachstumspolymere sind erfindungsgemäß vom Begriff Polyarylamin-Anlagerungsprodukt ebenfalls umfasst.

Es ist möglich, die primäre Anlagerungsreaktion und Folgereaktionen im selben Reaktionsschritt durchzuführen. Bevorzugt ist es jedoch, die Folgereaktionen in einem zweiten Reaktionsschritt durchzuführen.

Beispielsweise kann im Fall von Formaldehyd als elektrophiler Komponente zunächst ein primäres Anlagerungsprodukt ("Methylolamin") erhalten werden, dass dann in einem zweiten Schritt durch Vernetzung in ein Stufenwachstumspolymer überführt wird. Diese Polymerisation kann durch thermische Behandlung und/oder Säurezugabe initiiert werden. Die thermische Aushärtung wird bevorzugt bei einer Temperatur von > 80 °C, besonders bevorzugt von 90 °C bis 250 °C, ganz besonders bevorzugt von 140 °C bis 190 °C durchgeführt. Der pH-Wert beträgt dabei bevorzugt 3 bis 6,5 und kann mit gängigen Säuren (beispielsweise p-Toluolsulfonsäure, Amidosulfonsäure, Glyoxylsäure, Salpetersäure, Salzsäure, Schwefelsäure) eingestellt werden. Die Dauer der thermischen Behandlung richtet sich nach dem gewünschten Venetzungsgrad. Es kann wünschenswert sein, die Aushärtung zunächst nicht bis zur vollständigen Vernetzung durchzuführen, sondern den Prozess auf der Stufe noch schmelzbarer bzw. löslicher Vorkondensate zu unterbrechen. Diese können dann vor der endgültigen Aushärtung noch weiter behandelt, beispielsweise mit Füllstoffen vermischt, werden.

Neben der Polymerisation als Folgereaktion können die primären Anlagerungsprodukte auch funktionalisiert werden. Bspw. können die Methylolgruppen des primären Anlagerungsprodukts aus der erfindungsgemäßen nukleophilen Komponente und Formaldehyd mit zugesetzten Alkoholen verethert oder mit Carbonsäure(derivate-)n verestert werden. Als Alkohole bzw. Carbonsäuren/Carbonsäurederivate eignen sich beispielsweise aliphatische oder aromatische Alkohole, Diole oder Polyole; Poly-, Oligo-Ethylenglycol-Derivate, beispielsweise Simulsole; Oligo-, Hydroxycarbonsäurederivate, beispielsweise Caprolactonderivate; Poly-, Oligo-Esterpolyole; Poly-, Oligo-Lactide; Zucker, Zuckerderivate; Stärke, Stärkederivate oder Cellulosederivate. Die Veretherung wie auch die Veresterung wird bevorzugt bei einem pH-Wert von < 7 durchgeführt, besonders bevorzugt im pH-Bereich von 3 bis 6,5. Die Umsetzung erfolgt bei einer Temperatur von 20 °C bis 200 °C, bevorzugt von 40 °C bis 160 °C bei einem absoluten Druck von 0,1 bar bis 16 bar, bevorzugt von 0,1 bar bis 6 bar. Es ist auch möglich, die primären Anlagerungsprodukte zunächst wie oben beschrieben bis zur Stufe eines noch schmelzbaren bzw. löslichen Vorkondensats, das noch reaktive Gruppen enthält, auszuhärten und dann zu funktionalisieren.

Im Fall eines Oxocarbonsäurederivats als elektrophiler Komponente kann ebenfalls die (weitere) Polymerisation zu einem Stufenwachstumspolymer, falls gewünscht zu einem Harz, eine Folgereaktion sein. Ist anstelle der Polymerisation eine Funktionalisierung der primären Anlagerungsprodukte gewünscht, so kommen neben Veretherung bzw. Umetherung, die auch mit Formaldehyd als elektrophiler Komponente möglich ist, insbesondere auch Veresterung, Umesterung oder Amidisierung in Frage.

Die Ver- oder Umetherung wie auch die Ver- oder Umesterung wird bevorzugt bei einem pH-Wert von < 7 durchgeführt, besonders bevorzugt im pH-Bereich von 3 bis 6,5. Die Umsetzung erfolgt bei einer Temperatur von 20 °C bis 200 °C, bevorzugt von 40 °C bis 160 °C bei einem absoluten Druck von 0,1 bar bis 16 bar, bevorzugt von 0,1 bar bis 6 bar. Die Ver- oder Umetherung wie auch die Ver- oder Umesterung kann mit den gleichen Alkoholen wie zuvor im Falle des Formaldhehyds beschrieben erfolgen.

Die Amidisierung erfolgt durch Reaktion mit einem Überschuss an Ammoniak oder Amin. Als Amine werden bevorzugt primäre oder sekundäre aliphatische oder aromatische Amine verwendet. Die Amidisierung erfolgt bevorzugt bei einem pH-Wert von > 7, besonders bevorzugt bei einem pH-Wert von 8 bis 14.

In einer bevorzugten Ausgestaltung des erfindungsgemäßen Verfahrens stammt der aus der Aufarbeitung eines rohen aromatischen Diamins stammende, Hochsieder enthaltende Rückstandsstrom aus der Aufarbeitung von rohem TDA. Der "eigentliche" Wertproduktstrom der TDA-Aufarbeitung ist ein im Wesentlichen aus *meta*-TDA bestehender Strom. Dieser findet hauptsächlich Anwendung in der Herstellung von *meta*-Toluylendiisocyanat. Das erfindungsgemäße Verfahren ermöglicht attraktive Verwendungen für in der Aufarbeitung von rohem TDA neben dem im Wesentlichen aus *meta*-TDA bestehenden Strom anfallenden Nebenströmen (enthaltend den Leichtsieder *ortho-*TDA und ggf. andere Leichtsieder) und Rückstandsströmen (im Allgemeinen enthaltend oligomerisierte und/oder polymerisierte Anteile neben anderen Hochsiedern).

Insbesondere bevorzugt umfasst das erfindungsgemäße Verfahren die folgenden Schritte:
(I) Bereitstellung von entwässertem TDA;
(II) Reinigung des entwässerten TDA unter Abtrennung eines *ortho-*TDA enthaltenden Nebenstroms (i) und unter Abtrennung eines Hochsieder und bevorzugt TDA enthaltenden Rückstandsstroms (ii);
(III) Umsetzung des *ortho-*TDA enthaltenden Nebenstroms (i) oder des Hochsieder und bevorzugt TDA enthaltenden Rückstandsstroms (ii) oder einer Mischung aus beiden (iii), ggf. jeweils gemeinsam mit anderen nukleophilen Bestandteilen, mit einer elektrophilen, zur Reaktion mit einer Amin-Funktionalität befähigten Komponente.

Das in Schritt (I) bereitzustellende entwässerte TDA kann grundsätzlich aus allen aus dem Stand der Technik bekannten Verfahren zur Herstellung von TDA stammen. Bevorzugt wird TDA durch katalytische Hydrierung von Dinitrotoluol (DNT) hergestellt **(Schritt (I) (1))**. Die Hydrierung des DNT zum TDA erfolgt dabei mit Wasserstoff oder Gemischen aus Wasserstoff und inerten Gasen als Hydrierreagenz in einem oder mehreren Reaktionsräumen. Als Katalysatoren kommen dabei alle für katalytische Hydrierungen üblichen in Frage. Bevorzugt werden Katalysatoren, die Edelmetalle wie Pt, Pd, Rh, Ru oder Buntmetalle wie Ni, Co oder Cu oder deren Mischungen enthalten, eingesetzt. Besonders bevorzugt werden Katalysatoren, die Pt, Pd, Ni oder Cu enthalten, eingesetzt, und zwar als Suspension in Wasser. Im Falle von Edelmetallkatalysatoren werden diese auf Träger wie bspw. Aktivkohle, SiO₂ oder Al₂O₃ aufgebracht, im Fall von Ni-Katalysatoren kann auch Raney-Ni eingesetzt werden. Die Konzentration von Katalysator im Reaktionsraum liegt bevorzugt zwischen 0,01 Massen-% und < 20 Massen-%, bevorzugt zwischen 0,5 Massen-% und 10 Massen-%, bezogen auf die Gesamtmasse des Reaktionsgemisches im Reaktionsraum. Werden Gemische aus Wasserstoff und inerten Gasen eingesetzt, so sind bevorzugte Inertgase Ammoniak, Edelgase und/oder Stickstoff. Wasserstoff bzw. das Gemisch aus Wasserstoff und inerten Gasen wird bevorzugt so aufgegeben, dass sich im Reaktionsraum ein konstanter Druck einstellt, d. h. mit zunehmendem Reaktionsfortschritt (und damit Wasserstoffverbrauch) wird die Zufuhr von frischem Hydrierreagenz erhöht. Im Falle der Verwendung eines Gemisches aus Wasserstoff und inerten Gasen als Hydrierreagenz wird bevorzugt das Verhältnis aus Wasserstoff und Inertgas im zugeführten Hydrierreagenz sukzessive erhöht, um den Reaktorinhalt nicht an Wasserstoff verarmen zu lassen. Ganz besonders bevorzugt wird die Hydrierung wie in WO 2011/086050 A2 beschrieben in einer Kombination aus isotherm und adiabat betriebenen Reaktionsräumen durchgeführt.

In allen technisch relevanten Verfahren zur Herstellung von TDA wird ein Rohprodukt erhalten, welches neben TDA und hoch- und leichtsiedenden organischen Nebenkomponenten beträchtliche Anteile an Wasser (nachfolgend Prozesswasser) enthält. Dieses TDA-Wasser-Gemisch wird zunächst von Prozesswasser befreit **(Schritt (I) (2)).** Schritt (I) (2) kann optional Maßnahmen zur Vorreinigung des TDA umfassen, die über eine reine Wasserentfernung hinausgehen. So kann es vorteilhaft sein, das rohe TDA-Wasser-Gemisch aus der Reaktion zu filtrieren, um evtl. mitgeschleppte Katalysatorpartikel zu entfernen. Es kann ebenfalls vorteilhaft sein, gasförmige Komponenten wie überschüssigen Wasserstoff, als Nebenkomponente gebildeten Ammoniak oder vorhandene Inertgase zumindest teilweise abzutrennen.

In einer Ausgestaltung des erfindungsgemäßen Verfahrens geschieht die Abtrennung des Prozesswassers so, dass man das TDA-Wassergemisch, ggf. nach oben beschriebenen Maßnahmen zur Vorreinigung, einer Destillationskolonne zuführt, in welcher das Prozesswasser über Kopf und TDA als Sumpfprodukt abgeführt werden. In einem solchen Destillationsschritt wird die Hauptmenge des Prozesswassers entfernt. Hieran kann sich eine weitergehende Trocknung des als Sumpfstrom erhaltenen TDA, bevorzugt durch Entspannungsverdampfung, wobei weiteres Prozesswasser verdampft, anschließen.

In einer weiteren Ausgestaltung des erfindungsgemäßen Verfahrens wird das Prozesswasser in einer Seitenabzugskolonne, die ggf. mit einer Trennwand ausgestattet ist, als Seitenabzug entfernt, wobei TDA als Sumpfstrom anfällt und organische Leichtsieder über Kopf, nach Abtrennung und Rückführung von Wasser in die Seitenabzugskolonne, ausgetragen werden. Eine solche Vorgehensweise ist in EP 0 236 839 A2 beschrieben. Auch in diesem Fall kann sich eine weitergehende Trocknung des TDA-Sumpfstromes, bevorzugt durch Entspannungsverdampfung, anschließen.

Das von Prozesswasser weitgehend befreite TDA wird in Schritt (II) unter Abtrennung unter Abtrennung eines *ortho-TDA enthaltenden Nebenstroms (i)* und unter Abtrennung eines *Hochsieder und bevorzugt TDA enthaltenden Rückstandsstroms (ii)* gereinigt. Vorteilhafterweise wird der entwässerte TDA-Strom zunächst in einer Destillationskolonne (nachfolgend Isomeren-Trennungs-Kolonne) in seine wesentlichen Isomeren, d. h. *ortho-*TDA (Isomere mit zueinander *ortho*-ständigen Amingruppen) und *meta*-TDA (Isomere mit zueinander *meta*-ständigen Amingruppen), aufgetrennt, wobei bevorzugt eine Seitenabzugskolonne eingesetzt wird, in welcher ein überwiegend *ortho*-TDA-haltiger Strom als Seitenstrom und ein überwiegend *meta*-TDA- und Hochsieder-haltiger Strom als Sumpfstrom gewonnen werden, während weitere Leichtsieder über Kopf abgezogen werden. Der überwiegend *ortho*-TDA-haltige Strom kann teilweise bis vollständig als *ortho-TDA enthaltender Nebenstrom (i)* bzw. als Bestandteil der *Mischung (iii)* in Schritt (III) eingesetzt werden. Der überwiegend *meta*-TDA und Hochsieder enthaltende Sumpfstrom dieser Kolonne wird dann einer Verdampfung unterworfen, wobei ein im Wesentlichen aus *meta*-TDA (das Wertprodukt der TDA-Produktion) bestehender Strom gasförmig anfällt und ein überwiegend Hochsieder und *meta*-TDA enthaltender Strom als Sumpfprodukt erhalten wird. Diese Verdampfung kann, wie in WO 02/48075 A1 (nachfolgend *WO'075*), insbesondere S. 8, Z. 11 bis 22 in Verbindung mit FIG. 1, beschrieben, in einem einfachen Verdampfer ("B" in FIG. 1 von *WO '075*) erfolgen. Es ist jedoch auch möglich, den überwiegend *meta*-TDA und Hochsieder enthaltenden Sumpfstrom aus der Isomeren-Trennungs-Kolonne in einer weiteren Destillationskolonne (nachfolgend Rückstandskolonne) zu destillieren. Eine solche Vorgehensweise ist in EP 1 864 969 B1 (nachfolgend *EP '969*) in Absatz [0024] beschrieben. Im Rahmen der vorliegenden Erfindung ist es bevorzugt, die Rückstandskolonne als Seitenabzugskolonne auszugestalten. In dieser Ausgestaltung werden evtl. noch vorhandene Leichtsieder über Kopf, der im Wesentlichen aus *meta*-TDA bestehende Strom (Wertproduktstrom der TDA-Herstellung) im Seitenabzug und der überwiegend Hochsieder und m-TDA enthaltende Strom als Sumpfprodukt ausgetragen. Bevorzugt ist eine solche Destillationskolonne mit einem Umlaufverdampfer ausgestattet, wobei der nicht in die Destillationskolonne zurückgeführte Anteil des Sumpfaustrags der Destillationskolonne den überwiegend Hochsieder und *meta*-TDA enthaltenden Strom darstellt.

In einer Ausführungsform der vorliegenden Erfindung wird der überwiegend Hochsieder und *meta*-TDA enthaltende Strom, unabhängig davon, ob dieser wie in *WO '075* beschrieben oder unter Einsatz einer Destillationskolonne (beispielsweise wie in *EP '969,* Absatz [0024] beschrieben) erhalten wurde, als *Hochsieder und TDA enthaltender Rückstandsstrom (ii)* bzw. als Bestandteil der *Mischung (iii)* in Schritt (III) eingesetzt.

Es ist jedoch auch möglich, den überwiegend Hochsieder und *meta*-TDA enthaltenden Sumpfstrom teilweise oder vollständig weiter zu behandeln, um möglichst wenig *meta*-TDA mit diesem Strom auszutragen. Dies geschieht bevorzugt durch Strippung mit *ortho-*TDA in einer Stripp-Kolonne, wobei vorteilhafterweise der in der Isomeren-Trennungs-Kolonne erhaltene überwiegend *ortho*-TDA-haltige Strom als Stripp-Medium eingesetzt wird. Am Kopf der Stripp-Kolonne wird ein *ortho-TDA-* und *meta*-TDA-haltiger Strom erhalten, welcher nach Kondensation in die Isomeren-Trennungs-Kolonne zurückgeführt werden oder als *ortho-TDA enthaltender Nebenstrom (i)* bzw. als Bestandteil der *Mischung (iii)* in Schritt (III) eingesetzt werden kann. Der Sumpfaustrag der Stripp-Kolonne (bzw. der Sumpfaustrag des Verdampfers der Stripp-Kolonne) enthält neben Hochsiedern und Restmengen an *meta*-TDA auch *ortho-TDA.* Eine solche Vorgehensweise ist in *WO '075*, insbesondere S. 8, Z. 22 bis 31 in Verbindung mit FIG. 1, beschrieben (*überwiegend Hochsieder und meta*-TDA *enthaltender Strom =* "5" ; Stripp-Kolonne = "*C*"; *überwiegend ortho-TDA-haltiger Strom* = "3" bzw. "3'"; *ortho-TDA- und meta-TDA-haltiger Strom =* "7"; Isomeren-Trennungs-Kolonne = "A"; *Sumpfaustrag des Verdampfers der Stripp-Kolonne* = "6").

In dieser Ausführungsform der vorliegenden Erfindung wird der Hochsieder, *meta*-TDA und *ortho-*TDA enthaltende Sumpfstrom ("6" in FIG. 1 von *WO '075*) als *Hochsieder und TDA enthaltender Rückstandsstrom (ii)* in Schritt (III) eingesetzt.

Im Hinblick auf die Ausführungsform gemäß FIG. 1 von *WO '075* ist es also möglich:
a) bzgl. des Verdampfers B genauso zu verfahren wie dort beschrieben und den Strom 3' und/oder einen Teil des Stroms 7 als *ortho-TDA enthaltenden Nebenstrom (i)* bzw. als Bestandteil der *Mischung (iii)* und den Sumpfstrom 6 als *Hochsieder und TDA enthaltenden Rückstandsstrom (ii)* bzw. als Bestandteil der *Mischung (iii)* in Schritt (III) der vorliegenden Erfindung einzusetzen;
b) anstelle des Verdampfers B wie oben beschrieben eine Rückstandskolonne zu verwenden und den Strom 3' und/oder einen Teil des Stroms 7 als *ortho-TDA enthaltenden Nebenstrom (i)* bzw. als Bestandteil der *Mischung (iii)* und den auch in dieser Variante anfallenden Sumpfstrom 6 als *Hochsieder und TDA enthaltenden Rückstandsstrom (ii)* bzw. als Bestandteil der *Mischung (iii)* in Schritt (III) der vorliegenden Erfindung einzusetzen;
c) auf die Strippung mit *ortho-*TDA zu verzichten und den Strom 3' (Strom 3 entfällt in dieser Variante) als *ortho-TDA enthaltenden Nebenstrom (i)* bzw. als Bestandteil der *Mischung (iii)* und den Strom 5 als *Hochsieder und TDA enthaltenden Rückstandsstrom (ii)* bzw. als Bestandteil der *Mischung (iii)* in Schritt (III) der vorliegenden Erfindung einzusetzen.

In den Varianten a) und b) besteht die Möglichkeit, den Strom 5 nicht vollständig der Stripp-Kolonne zuzuführen, sondern einen Teilstrom abzuzweigen und ebenfalls als *Hochsieder und TDA enthaltenden Rückstandsstrom (ii)* bzw. als Bestandteil der *Mischung (iii)* in Schritt (III) einzusetzen. Die Variante c) gestattet es zwar nicht mehr, vom Erfindungsgedanken der WO *'075* Gebrauch zu machen, kann aber, abhängig von den wirtschaftlichen Randbedingungen, im Einzelfall auch sinnvoll sein.

Schritt (II) kann auch nach anderen in WO *'075* beschriebenen Ausführungsformen erfolgen. Als in Schritt (III) einzusetzender *Hochsieder und TDA enthaltender Rückstandsstrom (ii) bzw.* als Bestandteil der *Mischung (iii)* wird dann eingesetzt:
- In der Ausführungsform gemäß FIG. 2 (vgl. auch S. 9, Z. 1 bis 21 der Beschreibung von *WO '075*) ein Teilstrom des Stroms 50 und/oder der Strom 60 (ganz oder teilweise);
- In der Ausführungsform gemäß FIG. 3 (vgl. auch S. 9, Z. 22 bis S. 10, Z. 5 der Beschreibung von WO '*075*) ein Teilstrom des Stroms 51 und/oder der Strom 61 (ganz oder teilweise).

Als in Schritt (III) einzusetzender *ortho-TDA enthaltender Nebenstrom (i) bzw.* als Bestandteil der *Mischung (iii)* wird dann eingesetzt:
- In der Ausführungsform gemäß FIG. 2 (vgl. auch S. 9, Z. 1 bis 21 der Beschreibung von WO '*075*) Strom 30' und/oder der Strom 70 (ganz oder teilweise);
- In der Ausführungsform gemäß FIG. 3 (vgl. auch S.9, Z. 22 bis S. 10, Z. 5 der Beschreibung von WO '*075*) Stroms 31' und/oder der Strom 71 (ganz oder teilweise).

Es ist auch möglich, die Ausführungsformen gemäß FIG. 2 und FIG. 3 von WO *'075* so zu verändern, dass auf die Strippung des Sumpfprodukts 50 bzw. 51 mit o-TDA (30 bzw. 31) verzichtet und dieses Sumpfprodukt 50 bzw. 51 vollständig als *Hochsieder und TDA enthaltender Rückstandsstrom (ii) bzw.* als Bestandteil der *Mischung (iii)* in Schritt (III) eingesetzt wird. Eine solche Vorgehensweise erlaubt es zwar nicht mehr, vom Erfindungsgedanken der *WO '075* Gebrauch zu machen, kann aber, abhängig von den wirtschaftlichen Randbedingungen, im Einzelfall auch sinnvoll sein.

Darüber hinaus ist es möglich, die Isomerentrennungskolonne als Trennwandkolonne auszugestalten. In diesem Fall wird das Wertprodukt der TDA-Herstellung, ein im Wesentlichen aus *meta*-TDA bestehender Strom, als Seitenabzug gewonnen, während die *ortho*-Isomeren gemeinsam mit anderen Leichtsiedern über Kopf ausgetragen werden. Eine solche Ausgestaltung der Destillation ist in *EP '969* in den Absätzen [0025] und [0026] beschrieben. Das in der Trennwandkolonne anfallende Kopfprodukt kann entweder direkt oder nach einer nachgeschalteten weiteren Aufarbeitung als *ortho-TDA enthaltender Nebenstrom (i) bzw.* als Bestandteil der *Mischung (iii)* in Schritt (III) eingesetzt werden Der in der Trennwandkolonne anfallende Sumpfstrom kann entweder direkt oder nach einer nachgeschalteten weiteren Aufarbeitung als *Hochsieder und TDA enthaltender Rückstandsstrom (ii) bzw.* als Bestandteil der *Mischung (iii)* in Schritt (III) eingesetzt werden.

In **Schritt (III)** des erfindungsgemäßen Verfahrens erfolgt die Umsetzung der in Schritt (II) erhaltenen nukleophilen Komponenten (i) oder (ii) oder einer Mischung (iii) aus (i) und (ii), ggf. jeweils gemeinsam mit anderen Komponenten, mit elektrophilen, zur Reaktion mit einer Amin-Funktionalität befähigten Komponenten, welche, wie oben beschrieben, bevorzugt Formaldehyd umfasst. Schritt (III) wird dabei wie oben für aromatische Diamine allgemein beschreiben durchgeführt.

Die erfindungsgemäß einzusetzenden nukleophilen Komponenten (i), (ii) oder (iii) sind dazu geeignet, im Stand der Technik gebräuchliche nukleophile Komponenten mit Amin-Funktionalitäten wie insbesondere Melamin und andere Aminotriazine zumindest teilweise zu ersetzen, was mit erheblichen wirtschaftlichen Vorteilen einhergeht. Daneben sind auch ökologische Vorteile zu nennen, denn ein erfindungsgemäß einzusetzender Hochsieder enthaltender Rückstandsstrom wird nach dem Stand der Technik meist verbrannt, während die vorliegende Erfindung eine stoffliche Wiederverwertung ohne großen technischen und apparativen Aufwand ermöglicht.

Die erfindungsgemäß erhaltenen Poylarylamin-Anlagerungsprodukte können beispielsweise als Harze, Klebstoffe, Härter, Vernetzer, Beschichtungen für Holzwerkstoffe oder Lackzusätze verwendet werden.

### Beispiele

### Beispiel 1 (Vergleichsversuch - Verwendung von Melamin)

63 g (0,50 mol) Melamin werden bei Raumtemperatur zu 284 g einer Formalinlösung (Formaldehyd-Massenanteil = 37 %, entsprechend 3,5 mol Formaldehyd) gegeben. Unter Rühren wird mit verdünnter Natronlauge ein pH-Wert von ca. 8,5 eingestellt, und die Reaktionsmischung wird auf 80 °C aufgeheizt. Nach 30 Minuten lässt man auf Raumtemperatur abkühlen und filtriert die entstandene Suspension ab. Der Filterrückstand wird im Exsikkator getrocknet.

Auswaage: 72,3 g.

In allen folgenden Beispielen stammt der *ortho*-TDA-haltige Nebenstrom aus dem Seitenstrom einer als Seitenabzugskolonne ohne Trennwand ausgelegten Isomerentrennungskolonne, während der Rückstandsstrom aus dem Sumpfprodukt der Rückstandskolonne, nachdem dieses mit einem ortho-TDA-haltigen Strom gestrippt wurde, stammt.

### Beispiel 2 (Erindungsgemäß - Verwendung von Melamin und einer Mischung aus einem ortho-TDA-haltigen Nebenstrom und eines TDA und Hochsieder enthaltenden Rückstandsstroms)

56,8 g (0,45 mol) Melamin und 6,3 g einer Mischung, die ca. 36 Massen-% *ortho-*TDA Nebenstrom und 64 Massen-% Rückstandsstrom enthält, werden bei Raumtemperatur zu 284 g einer Formalinlösung (Formaldehyd-Massenanteil = 37 %, entsprechend 3,5 mol Formaldehyd) gegeben. Unter Rühren wird mit verdünnter Natronlauge ein pH-Wert von ca. 8,5 eingestellt, und die Reaktionsmischung wird auf 80 °C aufgeheizt. Nach 60 Minuten lässt man auf Raumtemperatur abkühlen und filtriert die entstandene Suspension ab. Der Filterrückstand wird im Exsikkator getrocknet.

Auswaage: 52,7 g.

Mittels ¹³C-NMR-Spektroskopie konnte gezeigt werden, dass sowohl Melamin- als auch *ortho-*TDA-Strukturen im isolierten Polyarylamin-Anlagerungsprodukt enthalten sind.

### Beispiel 3 (Erfindungsgemäß - Verwendung von Melamin und einer Mischung aus einem ortho-TDA-haltigen Nebenstrom und eines TDA und Hochsieder enthaltenden Rückstandsstroms)

Es wird wie in Beispiel 2 beschrieben verfahren mit dem Unterschied, dass 50,5 g (0,40 mol) Melamin und 12,8 g einer Mischung, die ca. 36 % *ortho*-TDA-Nebenstrom und ca. 64 % Rückstandsstrom enthält, verwendet werden.

Auswaage: 72,8 g.

Mittels ¹³C-NMR-Spektroskopie konnte gezeigt werden, dass sowohl Melamin- als auch o-TDA-Strukturen im isolierten Polyarylamin-Anlagerungsprodukt enthalten sind.

### Beispiel 4 (Erfindungsgemäß - Verwendung eines ortho-TDA-haltigen Nebenstroms)

71 g eines *ortho*-TDA-Nebenstroms (der fast ausschließlich aus *ortho-*TDA besteht und daher ca. 0,58 mol *ortho-*TDA enthält) werden bei Raumtemperatur zu 284 g Formalinlösung (Formaldehyd-Massenanteil = 37 %, entsprechend 3,5 mol Formaldehyd) gegeben und wie in Beispiel 2 beschrieben umgesetzt.

Auswaage: 70,0 g.

Mittels ¹³C-NMR-Spektroskopie konnte gezeigt werden, dass *ortho*-TDA-Strukturen im isolierten Polyaryl-Anlagerungsprodukt enthalten sind.

### Beispiel 5 (Erfindungsgemäß - Verwendung von Melamin und einer Mischung aus einem ortho-TDA-haltigen Nebenstrom und eines TDA und Hochsieder enthaltenden Rückstandsstroms)

11,3 g (0,09 mol) Melamin und 1,5 g einer Mischung, die die ca. 36 % *ortho*-TDA-Nebenstrom und ca. 64 % Rückstandsstrom enthält, werden bei Raumtemperatur zu 64,9 g Formalinlösung (Formaldehyd-Massenanteil = 37 %, entsprechend 0,85 mol Formaldehyd) gegeben. Unter Rühren wird mit verdünnter Natronlauge ein pH-Wert von ca. 8,5 eingestellt, und die Reaktionsmischung wird auf 90 °C aufgeheizt. Nach 60 Minuten wird das Rühren unterbrochen, und nach Absetzen lassen des Feststoffs wird der überstehenden Lösung eine Probe entnommen und mittels Gaschromatographie analysiert.

Es konnte kein *ortho-*TDA (und andere TDA-Isomere nur in Spuren) detektiert werden, was auf den vollständigen Einbau des ortho-TDA in das Polyarylamin-Anlagerungsprodukt deutet.

### Beispiel 6 (Erfindungsgemäß - Verwendung von Melamin und einer Mischung aus einem ortho-TDA-haltigen Nebenstrom und eines TDA und Hochsieder enthaltenden Rückstandsstroms)

Es wird wie in Beispiel 5 beschrieben verfahren mit dem Unterschied, dass 10,1 g (0,08 mol) Melamin und 2,5 g der o-TDA/Rückstandsmischung eingesetzt werden.

Es konnte kein *ortho-*TDA (und andere TDA-Isomere nur in Spuren) detektiert werden, was auf den vollständigen Einbau des ortho-TDA in das Polyarylamin-Anlagerungsprodukt deutet.

### Beispiel 7 (Erfindungsgemäß - Verwendung eines ortho-TDA-haltigen Nebenstroms)

12,4 g eines *ortho*-TDA-Nebenstroms (der fast ausschließlich aus *ortho-*TDA besteht und daher ca. 0,1 mol *ortho-*TDA enthält) werden bei Raumtemperatur zu 64,9 g Formalinlösung (Formaldehyd-Massenanteil = 37 %, entsprechend 0,85 mol Formaldehyd) gegeben und wie in Beispiel 5 beschrieben umgesetzt.

Es konnte kein *ortho-*TDA (und andere TDA-Isomere nur in Spuren) detektiert werden, was auf den vollständigen Einbau des o-TDA in das Polyarylamin-Anlagerungsprodukt deutet.

### Beispiel 8 (Erfindungsgemäß - Verwendung von Melamin und eines ortho-TDA-haltigen Nebenstroms)

Es wird wie in Beispiel 5 beschrieben verfahren mit dem Unterschied, dass 11,3 g (0,09 mol) Melamin und 1,3 g des *ortho*-TDA-Nebenstroms (ca. 0,01 mol *ortho-*TDA) verwendet werden. Ca. 15 Stunden nach Abschalten der Heizung wird eine Probe des wachsweichen Feststoffs mit Wasser extrahiert. Der Extrakt wurde mittels Gaschromatographie analysiert.

Es konnte kein *ortho-*TDA (und andere TDA-Isomere nur in Spuren) detektiert werden, was auf den vollständigen Einbau des ortho-TDA in das Polyarylamin-Anlagerungsprodukt deutet.

Der wachsweiche Feststoff wurde zerteilt um am Rotationsverdampfer eingeengt.

Auswaage: 29,5 g

### Beispiel 9 (Erfindungsgemäß - Verwendung von Melamin und eines ortho-TDA-haltigen Nebenstroms)

11,3 g (0,09 mol) Melamin und 1,3 g eines *ortho*-TDA-Nebenstroms (der fast ausschließlich aus *ortho-*TDA besteht und daher ca. 0,1 mol *ortho-*TDA enthält) werden bei Raumtemperatur zu 64,9 g Formalinlösung (Formaldehyd-Massenanteil = 37 %, entsprechend 0,85 mol Formaldehyd) gegeben und wie in Beispiel 5 beschrieben umgesetzt. Nach 60 Minuten wird das Rühren unterbrochen, und nach Absetzen lassen des Feststoffs wird der überstehenden Lösung eine Probe entnommen und mittels Gaschromatographie analysiert.

Es konnte kein *ortho-*TDA (und andere TDA-Isomere nur in Spuren) detektiert werden, was auf den vollständigen Einbau des o-TDA in das Polyarylamin-Anlagerungsprodukt deutet.

Der Ansatz wird unter Rühren auf Raumtemperatur abgekühlt. Nach einer Ruhezeit von ca. 15 Stunden wird der wachsweiche Feststoff zerteilt und am Rotationsverdampfer getrocknet.

Auswaage: 28,5 g

Das entstandene Harz wird mit heißem Wasser extrahiert. Anschließend wurde der Extrakt mittels Gaschromatographie analysiert.

Auch hier konnte kein *ortho-*TDA (und andere TDA-Isomere) detektiert werden

### Beispiel 10 (Erfindungsgemäß - Verwendung von Melamin und einer Mischung aus einem ortho-TDA-haltigen Nebenstrom und eines TDA und Hochsieder enthaltenden Rückstandsstroms)

Es wird wie in Beispiel 9 beschrieben verfahren mit dem Unterschied, dass anstelle von 1,3 g des *ortho*-TDA-Nebenstroms 1,3 g einer Mischung, die ca. 36 Massen-% ortho-TDA-Nebenstrom und 64 Massen-% Rückstandsstrom enthält, verwendet wird.

Es konnte kein *ortho-*TDA (und andere TDA-Isomere nur in Spuren) in der überstehenden Reaktionslösung detektiert werden, was auf den vollständigen Einbau der *ortho*-TDA-Strukturen in das Polyarylamin-Anlagerungsprodukt deutet.

Der Feststoff wird wie in Beispiel 9 beschrieben aufgearbeitet.

Auswaage: 30,1 g.

Das entstandene Harz wird mit heißem Wasser extrahiert. Anschließend wurde der Extrakt mittels Gaschromatographie analysiert.

Auch hier konnte kein *ortho-*TDA (und andere TDA-Isomere) detektiert werden.

### Beispiel 11 (Erfindungsgemäß - Verwendung einer Mischung aus einemortho-TDA-haltigen Nebenstrom und einemTDA und Hochsieder enthaltendenRückstandsstrom)

Es wird wie in Beispiel 9 beschrieben verfahren mit dem Unterschied, dass anstelle von 1,3 g des *ortho*-TDA-Nebenstroms 12,2 g einer Mischung, die ca. 36 Massen-% *ortho*-TDA-Nebenstrom und 64 Massen-% Rückstandsstrom enthält, verwendet wird.

Es konnte kein *ortho-*TDA (und andere TDA-Isomere nur in Spuren) in der überstehenden Reaktionslösung detektiert werden, was auf den vollständigen Einbau der *ortho*-TDA-Strukturen in das Polyarylamin-Anlagerungsprodukt deutet.

Der Feststoff wird wie in Beispiel 9 beschrieben aufgearbeitet.

Auswaage: 27,9 g.

Das entstandene Harz wird mit heißem Wasser extrahiert. Anschließend wurde der Extrakt mittels Gaschromatographie analysiert.

Auch hier konnte kein *ortho-*TDA (und andere TDA-Isomere nur in Spuren) detektiert werden. ]

## Patentansprüche

1. Verfahren zur Herstellung eines Polyarylamin-Anlagerungsprodukt durch Umsetzung einer nukleophilen Komponente mit einer mehrfunktionellen elektrophilen, zur Reaktion mit Amin-Funktionalitäten befähigten Komponente, wobei die nukleophile Komponente
(i) einen in der Aufarbeitung eines rohen aromatischen Diamins anfallenden, Leichtsieder umfassenden Nebenstrom
oder
*(ii)* einen in der Aufarbeitung eines rohen aromatischen Diamins anfallenden Hochsieder enthaltenden Rückstandsstrom
oder
*(iii)* eine Mischung aus einem in der Aufarbeitung eines rohen aromatischen Diamins anfallenden, Leichtsieder enthaltenden Nebenstrom und einem in derselben Aufarbeitung anfallenden Hochsieder enthaltenden Rückstandsstrom
umfasst.

2. Verfahren nach Anspruch 1, bei dem die elektrophile Komponente mindestens eine Verbindung mit einer oder mehreren Oxogruppe(n), bevorzugt C₁- bis C₄-Aldehyde und/oder Oxocarbonsäurederivate, umfasst.

3. Verfahren nach einem der Ansprüche 1 oder 2, bei dem die elektrophile Komponente mindestens eine Verbindung mit einer oder mehreren Epoxid-Funktionen, bevorzugt Epichlorhydrin, umfasst.

4. Verfahren nach einem der Ansprüche 1 bis 4, bei dem die elektrophile Komponente Formaldehyd, bevorzugt in Form einer wässrigen Lösung, umfasst.

5. Verfahren nach Anspruch 1, bei dem die elektrophile Komponente eine wässrige Lösung von Formaldehyd ist.

6. Verfahren nach einem der Ansprüche 1 bis 5, bei dem die nukleophile Komponente
den Bestandteil (i) in einem Massenanteil von mindestens 5 %, bevorzugt 10 % bis 100 %, bezogen auf die Gesamtmasse der nukleophilen Komponente,
oder
den Bestandteil *(ii)* in einem Massenanteil von mindestens 25 %, bevorzugt von 45 % bis 75 %, bezogen auf die Gesamtmasse der nukleophilen Komponente,
oder
den Bestandteil (iii) in einem Massenanteil von mindestens 5 %, bevorzugt von 9 % bis 100 %, bezogen auf die Gesamtmasse der nukleophilen Komponente, wobei der Massenanteil des Bestandteils (i) in der Mischung (iii) mindestens 10 %, bevorzugt 30 % bis 90 % und der Massenanteil des Bestandteils *(ii)* in der Mischung (iii) maximal 90 %, bevorzugt 10 % bis 70 %, beträgt,
enthält.

7. Verfahren nach einem der Ansprüche 1 bis 6, bei dem die nukleophile Komponente neben den Bestandteilen (i), (ii) oder (iii) weitere nukleophile Bestandteile ausgewählt aus Harnstoff, Aminotriazinen, insbesondere Melamin, Ammelin, Ammelid, Benzoguanamin, Acetoguanamin und Bisguanaminen, Spiroguanaminen und/oder nicht-aminischen Nukleophilen, insbesondere Phenol, umfasst.

8. Verfahren nach einem der Ansprüche 1 bis 7, bei dem die nukleophile Komponente bei einer Temperatur von 20 °C bis 220 °C mit der elektrophilen Komponente zu einem primären Anlagerungsprodukt umgesetzt wird.

9. Verfahren nach Anspruch 8, bei dem die Umsetzung zu einem primären Anlagerungsprodukt so durchgeführt wird, das alle primären und sekundären Aminfunktionalitäten der nukleophilen Komponente vollständig mit der elektrophilen Komponente umgesetzt werden.

10. Verfahren nach einem der Ansprüche 8 oder 9, bei dem das erhaltene primäre Anlagerungsprodukt weiter polymerisiert und / oder funktionalisiert wird.

11. Verfahren nach einem der Ansprüche 1 bis 10, bei dem das Diamin Toluylendiamin ist und das Verfahren die folgenden Schritte umfasst:
(I) Bereitstellung von entwässertem Toluylendiamin;
(II) Reinigung des entwässerten Toluylendiamins unter Abtrennung eines *ortho-*Toluylendiamin enthaltenden Nebenstroms (i) und unter Abtrennung eines Hochsieder und bevorzugt Toluylendiamin enthaltenden Rückstandsstroms (ii);
(III) Umsetzung
(a) des *ortho*-Toluylendiamin enthaltenden Nebenstroms (i)
oder
(b) des Hochsieder und bevorzugt Toluylendiamin enthaltenden Rückstandsstroms (ii)
oder
(c) einer Mischung aus beiden (iii),
ggf. jeweils gemeinsam mit anderen nukleophilen Bestandteilen, mit einer elektrophilen, zur Reaktion mit einer Amin-Funktionalität befähigten Komponente.

12. Verfahren nach Anspruch 11, bei dem in Schritt (II) das entwässerte Toluylendiamin aus Schritt (I) zunächst in einem ersten Schritt in einer Isomerentrennungskolonne destilliert wird, wobei ein *ortho*-Toluylendiamin enthaltender Nebenstrom abdestilliert wird, und anschließend in einem zweiten Schritt der Sumpfaustrag der Isomerentrennungskolonne erneut verdampft wird, wobei
(a) der im ersten Schritt in der Isomerentrennungskolonne abdestillierte *ortho-*Toluylendiamin enthaltende Nebenstrom, ggf. nach weiterer Aufarbeitung, als *ortho*-Toluylendiamin enthaltender Nebenstrom (i),
oder
(b) der im zweiten Schritt nicht verdampfte Anteil des Sumpfaustrags der Isomerentrennungskolonne, ggf. nach weiterer Aufarbeitung, als Hochsieder und bevorzugt Toluylendiamin enthaltender Rückstandsstrom (ii),
oder
(c) eine Mischung aus dem im ersten Schritt in der Isomerentrennungskolonne abdestillierten *ortho*-Toluylendiamin enthaltenden Nebenstrom, ggf. nach weiterer Aufarbeitung, und dem im zweiten Schritt nicht verdampften Anteil des Sumpfaustrags der Isomerentrennungskolonne, ggf. nach weiterer Aufarbeitung, als Mischung (iii)
in der Umsetzung mit der elektrophilen, zur Reaktion mit einer Amin-Funktionalität befähigten Komponente in Schritt (III) eingesetzt wird.

13. Verfahren nach Anspruch 11, bei dem in Schritt (II) das entwässerte Toluylendiamin aus Schritt (I) in einer Isomerentrennungskolonne umfassend eine Trennwand destilliert wird, wobei
(a) das Kopfprodukt der Isomerentrennungskolonnne, ggf. nach weiterer Aufarbeitung, als *ortho*-Toluylendiamin enthaltender Nebenstrom (i),
oder
(b) der Sumpfaustrag der Isomerentrennungskolonne, ggf. nach weiterer Aufarbeitung, als Hochsieder und bevorzugt Toluylendiamin enthaltender Rückstandsstrom (ii),
oder
(c) eine Mischung aus dem Kopfprodukt der Isomerentrennungskolonnne, ggf. nach weiterer Aufarbeitung, und dem Sumpfaustrag der Isomerentrennungskolonne, ggf. nach weiterer Aufarbeitung, als Mischung (iii)
in der Umsetzung mit der elektrophilen, zur Reaktion mit einer Amin-Funktionalität befähigten Komponente in Schritt (III) eingesetzt wird.

14. Polyarylamin-Anlagerungsprodukt, erhältlich nach einem Verfahren gemäß einem der Ansprüche 1 bis 14.

15. Verwendung eines Polyarylamin-Anlagerungsprodukts gemäß Anspruch 14 als Harz, Klebstoff, Härter, Vernetzer oder Lackzusatz.
